# EUROPÄISCHE PATENTSCHRIFT

(11) **EP 0 828 368 B1**
(45) Veröffentlichungstag und Bekanntmachung des Hinweises auf die Patenterteilung: **10.01.2001**
(21) Anmeldenummer: 96440069.1
(22) Anmeldetag: 30.08.1996
(51) Int. Cl.: G06F 17/30, H04N 1/00

(54) **Verfahren und System für einen Zugang zu multimedialen Dokumenten**
Method and system for accessing a multimedia document
Procédé et dispositif pour accéder à un document multimedia

(43) Veröffentlichungstag der Anmeldung: 11.03.1998
(73) Patentinhaber: ALCATEL, 75008 Paris (FR)
(72) Erfinder: Fouquet, Guy M., 75012 Paris (FR)
(74) Vertreter: Schätzle, Albin, Dipl.-Phys.

(56) Entgegenhaltungen:
- BYTE, Bd. 21, Nr. 1, 1.Januar 1996, Seite 77/78, 80 XP000567281 SINGLETON A: "WIRED ON THE WEB"
- PROCEEDINGS OF ANNUAL CONFERENCE ON SYSTEMS DOCUMENTATION, 2.Oktober 1994, Seiten 166-175, XP000600523 SHAW M L G ET AL: "ACTIVE DOCUMENTS COMBINING MULTIMEDIA AND EXPERT SYSTEMS"
- DR. DOBB'S JOURNAL, Bd. 21, Nr. 3, 1.März 1996, Seiten 84, 86-89, 96/97, XP000567404 TESSIER T: "USING JAVASCRIPT TO CREATE INTERACTIVE WEB PAGES A CROSS-PLATFORM OBJECT SCRIPTING LANGUAGE"

## Beschreibung

Die vorliegende Erfindung betrifft ein Verfahren und ein System für einen Zugang zu einem multimedialen Dokument über ein Kommunikationsnetz, wobei dieser Zugang von plattformverschiedenen Zugangsmitteln aus möglich ist.

In heutigen Multimedia-Systemen sind viele unterschiedliche Teilnehmerstationen, basierend auf unterschiedlichen Technologien mit verschiedenartigen Plattformen, wie z.B. IBM-kompatible PC, Apple Mackintosh oder Unix Workstations, über Kommunikationsnetze miteinander vernetzt. In Servern mit aufwendigen Datenbanken sind Inhalte für multimediale Dokumente abgespeichert, auf die ein Teilnehmer von seiner Teilnehmerstation aus, die ein Zugangsmittel zu den multimedialen Dokumenten darstellt, zugreifen kann.

Aus MHEG Explained" von T. Meyer-Boudnik et al, IEEE Multimedia, Frühjahr 1995, Seiten 26 bis 38 ist der Multimedia and Hypermedia Information Coding Experts Group (MHEG)-Standard bekannt, mit dem ein systemunabhängiges Zusammenarbeiten zwischen den unterschiedlichen Technologien gewährleistet werden soll. Der MHEG-Standard erlaubt eine Beschreibung von komplexen Daten, aus denen ein multimediales Dokument (Bilder, Ton, Text, Video, ....) zusammengesetzt ist, und stellt eine formelle Syntax zur Verfügung, mit der die Beziehungen zwischen diesen Daten und ihr dynamisches Verhalten beschrieben werden kann. Dynamisches Verhalten bedeutet dabei beispielweise Interaktivität oder Synchronisation von verschiedenen Teilen von Informationen, die Bestandteil des multimedialen Dokumentes sind aber in verschiedenen Servern abgespeichert sind. Die komplexen Daten, aus denen das multimediale Dokument zusammengesetzt ist, werden als MHEG-Objekte bezeichnet. Ein MHEG-Objekt kann wiederum aus einem Baum verschiedener anderer MHEG-Objekte zusammengesetzt sein.

Gemäß des MHEG-Standards sind Beschreibungen von MHEG-Objekten, aus denen ein multimediales Dokument zusammengesetzt ist, in einer objektorientierten Datenbank in einer datenbankspezifischen Programmiersprache abgespeichert. Auf diese objektorientierte Datenbank kann ein MHEG-Server zugreifen. Für die Übertragung eines der MHEG-Objekte von dem MHEG-Server zu einem der Zugangsmittel, das einen MHEG-Client darstellt, muß das MHEG-Objekt in eine Übertragungssprache codiert werden. Diese Übertragungssprache ist die Abstract Syntax Notation.I (ASN.I). In dem MHEG-Client muß das codierte MHEG-Objekt wieder decodiert werden. Der MHEG-Client muß Informationen über die Steuerung des dynamischen Verhaltens des MHEG-Objektes haben, da diese Informationen zwischen dem MHEG-Server und dem MHEG-Client nicht mitübertragen werden. In einem separaten Prozeß müssen in dem MHEG-Client die dynamischen Verbindungen zwischen den MHEG-Objekten, die das dynamische Verhalten beschreiben, aufgebaut und aktiviert werden.

Es ist ein Nachteil des Systems gemäß des MHEG-Standards, daß der Codierungs- und Decodierungsvorgang viel Zeit benötigen kann, so daß die Echtzeitverarbeitung der MHEG-Objekte beeinträchtigt wird. Des weiteren benötigt der MHEG-Client Informationen über die Steuerung des dynamischen Verhaltens eines der MHEG-Objekte. Der MHEG-Client benötigt daher eine gewisse Intelligenz.

Weiter wird in dem Artikel "Wired on the WEB", Singleton A., Byte, Bd. 21, Nr. 1, 1. Januar 1996, Seite 77/78, 80, ein Anwendungsbeispiel von Java im WorldWideWeb beschrieben:

In HTML Seiten (HTML = Hypertext Markup Language) werden zusätzlich Java Applets eingebunden. Die Java Applets werden erzeugt, indem Java-Quellcode durch einen Java-Compiler in ein kompaktes Zwischenformat ("byte-code") übersetzt wird, welches in Form einer Datei (class-file) auf einem HTML-Server abgelegt wird. Um auf das Applet zugreifen zu können wird auf einer HTML-Seite ein Applet-Tag erzeugt, welches auf die Datei im Zwischenformat (class-file) verweist. Ein Java-fähiger Browser, der z. B. über das Internet auf die HTML-Seite zugreift, die das oben genannte Applet-Tag enthält, generiert aufgrund des Applet-Tags eine "HTTP get" Instruktion um das Java-Applet im Zwischenformat herunterzuladen. Dieses Java-Applet wird dann durch ein weiteres Programm (Java Vitual Machine) interpretiert, in die Maschinensprache des lokalen Rechners umgewandelt und ausgeführt.

Weiter wird in dem Artikel "Active Documents Combining Multimedia and Expert Systems", Shaw Mildered L G et al., Proceedings of annula conference on systems documentation, 2.10.1994, Seiten 166-175 eine Multimedia-Dokumenten Architektur beschrieben, welche multimedia und hypermedia-Fähigkeiten unterstützt. Auch hier wird vorgeschlagen, in in einer "Word-Prozessing" und "Page-makeup" Umgebung erstelle Mulitmedia-Dokumente in einer Skript-Sprache verfaßte Programme einzubinden, um eine dynamische Interaktion eines solchen Multimedia-Dokuments zu ermöglichen.

Es ist daher die Aufgabe der vorliegenden Erfindung, ein Verfahren und ein System anzugeben, um einen einfachen und effektiven Zugang zu einem multimedialen Dokument zu ermöglichen.

Diese Aufgabe ist durch die technische Lehre der Ansprüche 1, 6, 7 und 8 gelöst.

Gemäß der Erfindung werden die Objekte, aus denen sich ein multimediales Dokument zusammensetzt, in einem Server in einer plattformunabhängigen Programmiersprache abgespeichert. Der Codierungs- und Decodierungsvorgang, der bei der Verwendung der Übertragungssprache ASN.1 notwendig ist, wird vorteilhafterweise durch eine einfache Interpretationsphase ersetzt.

Es ist ein Vorteil der Erfindung, daß die Informationen zur Steuerung des dynamischen Verhaltens eines Objektes in diesem jeweiligen Objekt selbst enthalten sind, so daß ein Zugangsmittel, zu dem dieses Objekt übertragen wird, keine eigenen Informationen zur Steuerung des dynamischen Verhaltens dieses Objektes benötigt.

In einer vorteilhaften Ausgestaltung wird die Erfindung des MHEG-Standards implementiert und die in dem Server abgespeicherten Objekte, aus denen ein multimediales Dokument zusammengesetzt ist, in der plattformunabhängigen Programmiersprache JAVA abgespeichert. In einer weiteren vorteilhaften Ausgestaltung der Erfindung wird der Binärcode zur Definition der Objekte in dem Server in Dateienform abgespeichert. Dadurch ist eine komplizierte Verwaltung der Objekte, wie bei herkömmlichen Datenbanken, vorteilhafterweise nicht notwendig.

Weitere vorteilhafte Ausgestaltungen der Erfindung sind den abhängigen Patentansprüchen zu entnehmen.

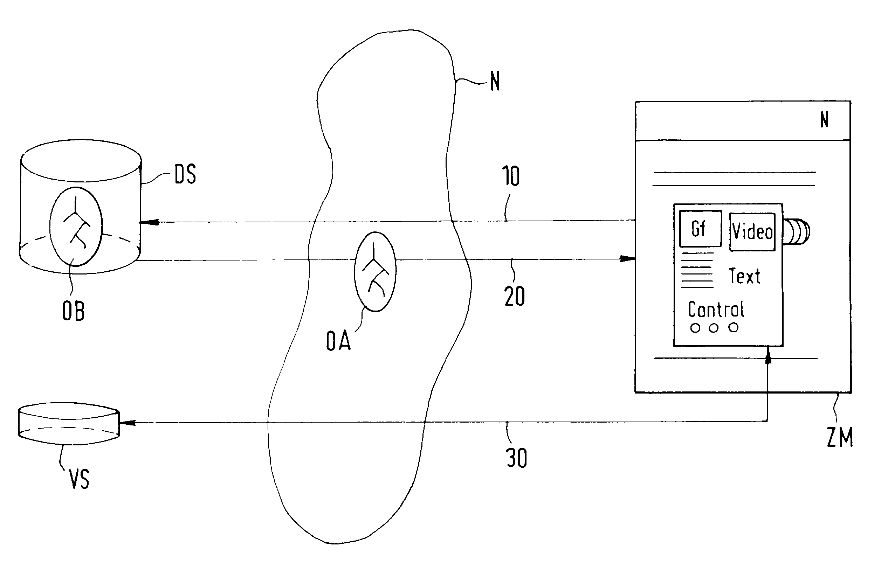

Im folgenden wird die Erfindung und ihre Vorteile anhand eines Ausführungsbeispiels und der Zeichnung verdeutlicht. Es zeigt:
- Die Figur: ein Ausführungsbeispiel des erfindungsgemäßen Systems, in dem das erfindungsgemäße Verfahren ausgeführt werden kann.

Die Figur zeigt ein Ausführungsbeispiel des erfindingsgemäßen Systems, in dem das erfindungsgemäße Verfahren ausgeführt wird. Die Figur zeigt einen ersten Server DS, in dem eine Vielzahl von Objekten, aus denen multimediale Dokumente zusammensetzbar sind, abgespeichert sind. Die in dem ersten Server DS abgespeicherten Objekte sind im vorliegenden Ausführungsbeispiel Objekte nach dem MHEG-Standard. Stellvertretend für die abgespeicherten MHEG-Objekte ist in der Figur ein Objekt OB abgebildet. Das System weist des weiteren mehrere Server auf, in denen Inhaltsdaten für die multimedialen Dokumente abgespeichert sind. In der Figur ist stellvertretend für diese Server ein zweiter Server VS abgebildet. Dieser zweite Server VS enthält Inhaltsdaten für Videofilme. In den anderen Servern mit Inhaltsdaten können beispielweise zugehörige Audioinformationen abgespeichert sein.

Die in dem ersten Server DS abgespeicherten MHEG-Objekte enthalten Referenzen zu in dem zweiten Server VS und den anderen Servern abgespeicherten Dokumenteninhalten. Das System enthält weiterhin eine Vielzahl von Zugangsmitteln, die unterschiedliche Plattformen aufweisen können. In der Figur ist stellvertretend ein Zugangsmittel ZM abgebildet. Der erste Server DS, der zweite Server VS und das Zugangsmittel ZM sind mit einem Kommunikationsnetz N verbunden. Das Kommunikationsnetz N ist im vorliegenden Ausführungsbeispiel das Internet. Es ist allerdings ebenfalls möglich, andere Kommunikationsnetze zu verwenden, wie z.B. ein Kommunikationsnetz nach dem Asynchronous Transfer Modus (ATM)-Standard, etc., sofern die über diese Kommunikationsnetze miteinander kommunzierenden Einrichtungen entsprechend eingepaßt sind.

Die Figur zeigt des weiteren ein MHEG-Objekt OA, das von dem ersten Server DS zu dem Zugangsmittel ZM über das Internet N übertragen wird.

Die MHEG-Objekte in dem ersten Server DS sind in Bytecode in der Programmiersprache JAVA in Form von Dateien abgespeichert. JAVA ist eine objektorientierte, plattformunabhängige Programmiersprache, die es erlaubt, den JAVA-Code auf unterscheidlichen Plattformen auszuführen, ohne daß eine Rekompilation stattfinden muß.

In der objektorientierten Technik ist ein Objekt eine Instanz einer spezifischen Klasse. Eine Klasse ist aus Attributen, die ihren Inhalt beschreiben, und Methoden, die ihr dynamisches Verhalten beschreiben, zusammengesetzt. Die in dem ersten Server DS abgespeicherten MHEG-Objekte in der Programmiersprache JAVA enthalten neben Informationen über das statische Verhalten des MHEG-Objektes, d.h. der Zusammensetzung des Objektes, der räumlichen Anordnung des jeweiligen Objektes innerhalb des multimedialen Dokumentes, der Beziehungen zwischen den verschiedenen Objekten, etc., ebenfalls Informationen über das dynamische Verhalten des jeweiligen Objektes. Dies bedeutet, daß ebenfalls die Informationen über die Steuerung des dynamischen Verhaltens des MHEG-Objektes, wie z.B. zeitliche Beziehungen zwischen verschiedenen Objekten oder Angaben über Synchronisationen mit anderen Objekten, in dem jeweiligen MHEG-Objekt enthalten sind. Ein Beispiel für eine Information für das dynamische Verhalten eines Objektes ist die zeitliche Dauer der Anzeige eines Bildes auf einem Bildschirm des Zugangsmittels für 10 Sekunden.

Für die Übertragung des MHEG-Objektes OA von dem ersten Server DS über das Internet N zu dem Zugangsmittel ZM ist keine Codierung bzw. Decodierung notwendig. Das Objekt OA wird in der Programmiersprache JAVA zu dem Zugangsmittel ZM übertragen und dort empfangen. Der JAVA-Code des Objektes OA muß in dem Zugangsmittel ZM interpretiert werden, d.h., er wird von einem JAVA-Interpreter in die Maschinensprache des Zugangsmittels ZM transformiert. Dieser JAVA-Interpreter ist ein Interface zwischen dem unabhängigen JAVA-Code und der Plattform, unter der dieser JAVA-Code ausgeführt werden muß. Das Ergebnis dieser Interpretation ist die Ausführung des JAVA-Programms. Ein solcher JAVA-Interpreter kann beispielweise ein JAVA-fähiger World Wide Web-Browser, wie z.B. Netscape 2.X sein. Dadurch ist vorteilhafterweise gewährleistet, daß ein Teilnehmer für die Anwendung der vorliegenden Erfindung eine weitverbreitete Mensch-Maschine-Schnittstelle verwenden kann.

Die für die Zusammensetzung des multimedialen Dokumentes notwendigen MHEG-Objekte, die zu dem Zugangsmittel ZM übertragen werden, beinhalten jegliche Information zur Ausführung und zum Aufbau des multimedialen Dokumentes in dem Zugangsmittel ZM. Das Zugangsmittel ZM selbst benötigt keine weitergehenden Informationen zur Behandlung des empfangenen Objektes.

In dem Ausführungsbeispiel der Erfindung gemäß der vorliegenden Figur wird in einem ersten Schrift 10 mittels einer netztransparenten Anweisung gemäß des Hypertext Transfer Protokolls (HTTP) von dem Zugangsmittel ZM auf den ersten Server DS zugegriffen. Mit dieser HTTP-Anweisung gibt das Zugangsmittel ZM die Adresse der Datei mit den Objekten des gewünschten multimedialen Dokumentes innerhalb des ersten Servers DS an. Die entsprechenden Objekte werden dann in einem Schritt 20 von dem ersten Server DS zu dem Zugangsmittel ZM übermittelt, dort von dem JAVA-Interpreter interpretiert und anschließend in einem Schritt 30 der in den Objekten angegebene Dokumenteninhalt, der in dem zweiten Server VS abgespeichert ist, angefordert und von dem zweiten Server VS zu dem Zugangsmittel ZM übermittelt. Das Zugangsmittel ZM kann nun das multimediale Dokument aufbauen und ausführen.

## Patentansprüche

1. Verfahren, um von plattformverschiedenen Zugangsmitteln (ZM) aus auf multimediale Dokumente zuzugreifen, die medienverschiedene Dokumenten-Inhalte und Daten aufweisen, die die Beziehungen zwischen den Dokumenten-Inhalten des jeweiligen multimedialen Dokuments und das dynamische Verhalten der Dokumenten-Inhalte beschreiben,
**dadurch gekennzeichnet,** daß für ein multimediales Dokument eine hierarchisch strukturierte Gruppe von MHEG-Objekten (OA, OB), die Referenzen auf Dokumenten-Inhalte sowie Informationen über die Steuerung des dynamischen Verhaltens von Dokumenten-Inhalten aufweisen, in einem Server (DS) kodiert in einer plattformunabhängigen objektorientierten Programmiersprache abgespeichert wird, und daß beim Zugriff auf das multimediale Dokument diese Objekte (OA, OB) von dem Server (DS) über ein Kommunikationsnetz (N) zu einem Zugangsmittel (ZM) übertragen werden, in welchem ein Interpreter für die plattformunabhängige objektorientierte Programmiersprache diese in der plattformunabhängigen objektorientierten Programmiersprache kodierten Objekte (OA, OB) in Maschinensprache übersetzt.

2. Verfahren nach Anspruch 1, dadurch gekennzeichnet, daß die plattformunabhängige objektorientierte Programmiersprache die Programmiersprache JAVA ist.

3. Verfahren nach Anspruch 1, dadurch gekennzeichnet, daß das Kommunikationsnetz (N) das Internet ist.

4. Verfahren nach Anspruch 1, dadurch gekennzeichnet, daß die Objekte (OA, OB) in Dateien in dem Server (DS) abgespeichert sind.

5. Verfahren nach Anspruch 4, dadurch gekennzeichnet, daß das Zugangsmittel (ZM) mittels einer Anweisung gemäß des hypertext transfer protocol (http) auf den Server (DS) zugreift.

6. System, um von plattformverschiedenen Zugangsmitteln (ZM) aus auf multimediale Dokumente zuzugreifen, die medienverschiedene Dokumenten-Inhalte und Daten aufweisen, die die Beziehungen zwischen den Dokumenten-Inhalten des jeweiligen multimedialen Dokuments und das dynamische Verhalten der Dokumenten-Inhalte beschreiben,
**dadurch gekennzeichnet,** daß das System mit einem Server (DS) versehen ist, in dem für ein multimediales Dokument eine hierarchisch strukturierte Gruppe von MHEG-Objekten (OA, OB), die Referenzen auf Dokumenten-Inhalte sowie Informationen über die Steuerung des dynamischen Verhaltens von Dokumenten-Inhalten aufweisen, kodiert in einer plattformunabhängigen objektorientierten Programmiersprache abgespeichert ist, daß das System mit plattformverschiedenen Zugangsmitteln (ZM) versehen ist, die jeweils mit einem Interpreter zur Übersetzung dieser in der plattformunabhängig objektorientierten Programmiersprache kodierten Objekte (OA, OB) in Maschinensprache versehen sind, und daß das System mit einem Kommunikationsnetz (N) zur Übertragung von Objekten von dem Server (DS) zu einem der Zugangsmittel (ZM) versehen ist.

7. Server (DS), um von plattformverschiedenen Zugangsmitteln (ZM) aus den Zugriff auf multimediale Dokumente zu ermöglichen, die medienverschiedene Dokumenten-Inhalte und Daten aufweisen, die die Beziehungen zwischen den Dokumenten-Inhalten des jeweiligen multimedialen Dokuments und das dynamische Verhalten der Dokumenten-Inhalte beschreiben,
**dadurch gekennzeichnet,** daß der Server (DS) mit Speichermitteln versehen ist, in denen für ein multimediales Dokument eine hierarchisch strukturierte Gruppe von MHEG-Objekten, die Referenzen auf Dokumenten-Inhalte sowie Informationen über die Steuerung des dynamischen Verhaltens von Dokumenten-Inhalten aufweisen, kodiert in einer plattformunabhängigen objektorientierten Programmiersprache abgespeichert ist, und daß der Server (DS) mit Mitteln versehen ist, um beim Zugriff auf das multimediale Dokument diese Objekte (OA, OB) über ein Kommunikationsnetz (N) zu einem Zugangsmittel (ZM) zu senden, in welchem ein Interpreter für die plattformunabhängige objektorientierte Programmiersprache diese in der plattformunabhängigen objektorientierten Programmiersprache kodierten Objekte (OA, OB) in Maschinensprache übersetzt.

8. Computer Programm für einen Server (DS),
**dadurch gekennzeichnet,** daß das Computer Programm so ausgestaltet ist, daß es bei seinem Ablauf auf dem Server (DS) das Verfahren nach Anspruch 1 ausführt.

## Claims

1. A method of accessing multimedia documents from access means (ZM) based on different platforms, the multimedia documents comprising document contents of different media and data which describe the relationships between the contents of the respective multimedia document and the dynamic behaviuor of the document contents,
**characterized in** that for a multimedia document, a hierarchically structured group of MHEG objects (OA, OB) containing references to document contents and information about the control of the dynamic behavior of document contents is stored in a server (DS) in a platform-independent, object-oriented programming language, and that when the multimedia document is accessed, these objects (OA, OB) are transferred from the server (DS) over a communications network (N) to an access means (TM) in which an interpreter translates these objects (OA, OB) from the platform-independent, object-oriented programming language into machine language.

2. A method as claimed in claim 1, characterized in that the platform-independent, object-oriented programming language is the JAVA programming language.

3. A method as claimed in claim 1, characterized in that the communications network (N) is the Internet.

4. A method as claimed in claim 1, characterized in that the objects (OA, OB) are stored in the server (DS) in files.

5. A method as claimed in claim 4, characterized in that the access means (ZM) access the server (DS) by means of a request according to the hypertext transfer protocol (http).

6. A system for accessing multimedia documents from access means (ZM) based on different platforms, the multimedia documents comprising document contents of different media and data which describe the relationships between the contents of the respective multimedia document and the dynamic behavior of the document contents,
**characterized in** that the system comprises a server (DS) in which for a multimedia document, a hierarchically structured group of MHEG objects (OA, OB) containing references to document contents and information about the control of the dynamic behavior of document contents is stored in a platform-independent, object-oriented programming language, that the system further comprises access means (ZM) based on different platforms and each provided with an interpreter for translating these objects (OA, OB) from the platform-independent, object-oriented programming language into machine language, and that the system further comprises a communications network (N) for transferring objects from the server (DS) to one of the access means (ZM).

7. A server (DS) for enabling access from access means (ZM) based on different platforms to multimedia documents comprising document contents of different media and data which describe the relationships between the contents of the respective multimedia document and the dynamic behavior of the document contents,
**characterized in** that the server (DS) comprises storage means in which for a multimedia document, a hierarchically structured group of MHEG objects (OA, OB) containing references to document contents and information about the control of the dynamic behavior of document contents is stored in a platform-independent, object-oriented programming language, and that the server further comprises means for transferring these objects (OA, OB) over a communications network (N) to an access means (ZM) in which an interpreter translates these objects (OA, OB) from the platform-independent, object-oriented programming language into machine language.

8. A computer program for a server (DS),
**characterized by** being designed to carry out the method according to claim 1 when being executed on the server (DS).

## Revendications

1. Procédé destiné à permettre l'accès, à partir d'organes d'accès (ZM) contenant des plates-formes différentes, à des documents multimédia, qui comportent des contenus de documents de divers médias et des données qui décrivent les relations entre les contenus des documents de chaque document multimédia et le comportement dynamique des contenus des documents, caractérisé en ce que, pour un document multimédia, un groupe hiérarchiquement structuré d'objets MHEG (OA, OB), qui comportent des références sur les contenus des documents, ainsi que des informations sur la commande du comportement dynamique des contenus des documents, est stocké dans un serveur (DS) sous forme codée dans un langage de programmation orienté objet et indépendant de la plate-forme, et en ce que, au moment de l'accès au document multimédia, ces objets (OA, OB) sont transférés par le serveur (DS) par l'intermédiaire d'un réseau de communication (N) vers un organe d'accès (ZM), dans lequel un interpréteur du langage de programmation orienté objet et indépendant de la plate-forme convertit en langage machine ces objets (OA, OB) codés dans le langage de programmation orienté objet et indépendant de la plate-forme.

2. Procédé selon la revendication 1, caractérisé en ce que le langage de programmation orienté objet et indépendant de la plate-forme est le langage de programmation JAVA.

3. Procédé selon la revendication 1, caractérisé en ce que le réseau de télécommunication (N) est le réseau Internet.

4. Procédé selon la revendication 1, caractérisé en ce que les objets (OA, OB) sont stockés sous forme de fichiers dans le serveur (DS).

5. Procédé selon la revendication 4, caractérisé en ce que l'organe d'accès (ZM) accède au serveur (DS) au moyen d'une instruction selon le protocole HTTP (hypertext transfer protocol).

6. Système destiné à permettre l'accès, à partir d'organes d'accès (ZM) contenant des plates-formes différentes, à des documents multimédia, qui comportent des contenus de documents de divers médias et des données qui décrivent les relations entre les contenus des documents de chaque document multimédia et le comportement dynamique des contenus des documents, caractérisé en ce que le système est équipé d'un serveur (DS), dans lequel est stocké, sous forme codée dans un langage de programmation orienté objet et indépendant de la plate-forme, un groupe hiérarchiquement structuré d'objets MHEG, qui comportent des références sur les contenus des documents, ainsi que des informations sur la commande du comportement dynamique des contenus des documents, en ce que le système est équipé d'organes d'accès (ZM) contenant des plates-formes différentes, qui sont équipés chacun d'un interpréteur destiné à convertir en langage machine ces objets (OA, OB) codés dans le langage de programmation orienté objet et indépendant de la plate-forme, et en ce que le système est équipé d'un réseau de communication (N) destiné à transférer les objets du serveur (DS) vers l'organe d'accès (ZM).

7. Serveur (DS) destiné à permettre l'accès, à partir d'organes d'accès (ZM) contenant des plates-formes différentes, à des documents multimédia, qui comportent des contenus de documents de divers médias et des données qui décrivent les relations entre les contenus des documents de chaque document multimédia et le comportement dynamique des contenus des documents, caractérisé en ce que le serveur (DS) est équipé de mémoires, dans lesquelles est stocké, pour un document multimédia, sous forme codée dans un langage de programmation orienté objet et indépendant de la plate-forme, un groupe hiérarchiquement structuré d'objets MHEG (OA, OB), qui comportent des références sur les contenus des documents, ainsi que des informations sur la commande du comportement dynamique des contenus des documents, et en ce que le serveur (DS) est équipé d'organes qui, au moment de l'accès au document multimédia, envoient ces objets (OA, OB) par l'intermédiaire d'un réseau de communication (N) vers un organe d'accès (ZM), dans lequel un interpréteur du langage de programmation orienté objet et indépendant de la plate-forme convertit en langage machine ces objets (OA, OB) codés dans le langage de programmation orienté objet et indépendant de la plate-forme.

8. Programme informatique destiné à un serveur (DS), caractérisé en ce que le programme informatique est configuré de telle sorte que, pendant son déroulement, il exécute sur le serveur (DS) le procédé selon la revendication 1.
